# FASCICULE DE BREVET EUROPEEN

(11) **EP 3 107 486 B1**
(45) Date de publication et mention de la délivrance du brevet: **02.09.2020**
(21) Numéro de dépôt: 15709286.7
(22) Date de dépôt: 20.02.2015
(51) Int. Cl.: A61D 19/02

(54) **PAILLETTE POUR LA CONSERVATION D'UNE DOSE PRÉDÉTERMINÉE DE SUBSTANCE À BASE LIQUIDE, NOTAMMENT UNE SUBSTANCE BIOLOGIQUE**
STROHHALM ZUR KONSERVIERUNG EINER VORBESTIMMTEN ABGEMESSENEN MENGE EINER FLÜSSIGEN SUBSTANZ, INSBESONDERE EINER ORGANISCHEN SUBSTANZ
STRAW FOR PRESERVING A PREDETERMINED MEASURED AMOUNT OF A LIQUID SUBSTANCE, PARTICULARLY AN ORGANIC SUBSTANCE

(30) Priorité: 21.02.2014 FR 1451415
(43) Date de publication de la demande: 28.12.2016
(73) Titulaire: IMV Technologies, 61300 Saint Ouen Sur Iton (FR)
(72) Inventeur: SCHMITT, Eric, 53700 Villaines-la-Juhel (FR); GORGES, Jean-Charles, 72610 Chenay (FR)
(74) Mandataire: Santarelli
(86) Numéro de dépôt international: PCT/FR2015/050411
(87) Numéro de publication internationale: WO 2015/124875

(56) Documents cités:
- EP-A1- 0 873 726
- US-A- 5 851 491
- US-A1- 2002 183 653
- US-B1- 6 416 611

## Description

L'invention a trait aux paillettes pour la conservation d'une dose prédéterminée de substance à base liquide, notamment une substance biologique, par exemple de la semence animale pure ou diluée ou encore un milieu de conservation contenant des embryons.

On sait qu'une telle paillette est formée classiquement par un tube mince, ayant par exemple un diamètre interne de 1,6 ou 2,5 mm, et par un bouchon engagé dans le tube mince.

A l'état rempli, le bouchon est disposé au voisinage d'une première extrémité du tube et la dose de substance est disposée dans la paillette entre le bouchon et la seconde extrémité du tube.

Pour remplir la paillette, la première extrémité du tube, voisine du bouchon, est mise en communication avec une source de vide tandis que la seconde extrémité est mise en communication avec un récipient contenant la substance à introduire dans la paillette. L'air initialement contenu entre le bouchon et la seconde extrémité est aspiré au travers du bouchon tandis que la substance progresse dans le tube jusqu'à ce qu'elle rencontre le bouchon, qu'elle ne peut franchir car il devient étanche aux liquides.

Le cas échéant, après remplissage, la paillette est soudée au voisinage de l'une ou de ses deux extrémités et est stockée au froid.

Pour vider la paillette, le cas échéant après découpage des portions d'extrémité soudées et décongélation, on fait pénétrer dans le tube par l'extrémité la plus proche du bouchon une tige qui vient porter contre le bouchon. Avec cette tige, on fait coulisser le bouchon à la façon d'un piston vers l'extrémité la plus éloignée du bouchon, de sorte que la dose de substance initialement contenue dans la paillette en est expulsée par cette extrémité.

En général, les bouchons de paillette sont du type tripartite décrit à l'origine dans le brevet français 995.878, correspondant au brevet britannique 669,265, c'est-à-dire formés par deux tampons en substance fibreuse enserrant une poudre se transformant au contact d'un liquide en une pate ou gel imperméable adhérent à la paroi du tube pour que le bouchon soit étanche aux liquides.

La demande de brevet français 2 651 676 propose un bouchon constitué par une première pluralité de fibres et une deuxième pluralité de fibres associées entre elles par tressage, la première pluralité de fibres étant constituée par des fibres polymérizables sous l'action du liquide et la seconde pluralité de fibres étant constituée par des fibres conductrices du liquide par effet de capilarité. Les fibres polymérisables sous l'action du liquide sont faites dans la même matière que la poudre des bouchons tripartites conventionnels.

Le brevet français 2 753 367, auquel correspond le brevet américain 5,868,178, propose un bouchon tripartite dont la longueur du tampon externe est au moins deux fois supérieure à la longueur du tampon interne.

La demande de brevet européen EP 0 873 726 propose que le bouchon soit fait d'un cylindre monobloc de matière microporeuse hydrophobe.

Les demandes de brevet français 2 771 285 et 2 784 572, auxquelles correspondent la demande de brevet américain US 2001/0014376 et le brevet américain US 6,416,611, proposent que le bouchon soit constitué d'un insert rigide percé d'un orifice sensiblement coaxial et d'une membrane microporeuse et hydrophobe associée à l'insert pour obturer l'orifice de l'insert du côté interne.

La demande de brevet français 2 781 662, auquel correspond le brevet américain US 6,203,489, propose que le bouchon soit constitué par un tampon fibreux comprenant un composé de matériau gélifiant présent sous une forme dispersée perméable aux gaz et comprenant un composé de fibres support, avec le composé de matériau gélifiant qui est finement réparti dans tout le composé de fibres support, de façon à permettre le gonflement du matériau gélifiant après mise en contact avec une substance contenant de l'eau, pour former un bouchon intégré avec le composé de fibres support. Le matériau gélifiant est fait dans la même matière que la poudre des bouchons tripartites conventionnels. Le matériau gélifiant gonfle en absorbant l'eau présente dans le liquide pour remplir complètement le tube et, ensuite, il atteint un état de gélification tout en se liant avec le composé de fibres support pour former un bouchon intégré.

Les demandes de brevet français 2 824 255 et 2 824 256, auxquelles correspondent les demandes de brevet américains US 2002/0183653 et US 2002/0188222, proposent d'ajouter dans le bouchon, en outre de la poudre et des fibres, des éléments non absorbants, en l'occurrence un noyau en matière thermoplastique, revêtu d'une gaine en fils tressés, et de la matière non absorbante sous forme dispersée, dans la poudre.

La demande PCT WO 2010/070533 propose que le bouchon soit fait d'un cylindre monobloc de matière microporeuse auto-scellante frittée telle que décrite par exemple dans la demande PCT WO 2010/070533, c'est-à-dire constituée d'une matrice microporeuse et de particules de substance à forte capacité d'absorption d'eau supportées par la matrice microporeuse, laquelle fournit au bloc une cohérence mécanique intrinsèque (les particules ne se détachent pas) y compris à l'état humecté.

L'invention vise à fournir une telle paillette qui soit simple, commode et économique à fabriquer et qui soit performante à l'utilisation.

L'invention propose à cet effet une paillette pour la conservation d'une dose prédéterminée de substance à base liquide contenant de l'eau, notamment une substance biologique, comportant un tube s'étendant entre une première extrémité et une seconde extrémité et comportant un bouchon perméable aux gaz et étanche aux liquides, lequel bouchon est disposé dans le tube au voisinage de sa première extrémité et s'étend entre une première extrémité tournée vers la première extrémité du tube et une seconde extrémité tournée vers la seconde extrémité du tube, avec ledit bouchon et ledit tube qui sont configurés pour qu'après que la substance à base liquide est venue à la rencontre du bouchon par sa seconde extrémité, le bouchon bloque le passage de la substance à base liquide et est, par poussage sur sa première extrémité, coulissable dans le tube vers la seconde extrémité du tube ;
caractérisée en ce que le bouchon comporte du côté de la seconde extrémité du tube un tampon barrière formé sur toute la section du tube par des fils hydrophobes.

Du fait que les fils qui forment le tampon barrière sur toute la section du tube sont hydrophobes, le tampon barrière a un effet répulsif sur l'eau, et donc sur la substance à base liquide contenant de l'eau.

Bien que cela soit surprenant, cet effet répulsif n'empêche pas la substance à base liquide de traverser le tampon barrière et d'atteindre le reste du bouchon, et en particulier le composant de scellement qui permet au bouchon d'être perméable aux gaz et étanche aux liquides.

En effet, en pratique, la substance à base liquide, lorsqu'elle remplit le tube de la paillette, vient à la rencontre du bouchon avec une certaine vitesse. L'effet de vitesse domine alors l'effet répulsif.

Au cours du passage de la substance à base liquide dans le tampon barrière, les fils de ce tampon, du fait qu'ils sont hydrophobes, n'absorbent pas de liquide.

Après que le composant de scellement du bouchon est devenu étanche et que le passage de la substance à base liquide est bloqué, le tampon barrière ne garde pas le liquide situé dans ses interstices mais le refoule dans la dose de substance à base liquide située entre le tampon barrière et la seconde extrémité du tube.

Par conséquent, il n'y a pas de consommation ou alors une consommation très réduite de substance à base liquide par le tampon barrière.

On notera que dans les bouchons de paillettes déjà connus qui mettent en oeuvre un composant hydrophobe, ce composant hydrophobe sert à bloquer le passage du liquide.

Ici, le composant hydrophobe ne sert nullement à bloquer le passage du liquide, au contraire il est traversé par le liquide. C'est seulement après qu'il refoule le liquide.

On notera que pour reconnaître si le tampon barrière est hydrophobe, il suffit de le sortir du tube de la paillette, à l'état sec initial, et de déposer alors sur le tampon barrière des gouttes d'eau. Si le tampon barrière est hydrophobe, les gouttes s'écoulent sur le tampon barrière sans pénétrer dans celui-ci.

Selon des caractéristiques avantageuses de mise en oeuvre de la paillette selon l'invention :
- chaque fil comporte des fibres et un revêtement pour rendre le fil hydrophobe, lequel revêtement comporte une résine fluorée ;
- ladite résine fluorée est une résine fluorocarbonnée ;
- ladite résine fluorocarbonnée a une formule en CF₃(CF₂)ₙ avec n plus grand que 5 et de préférence n = 5 ou n = 7 ;
- ledit revêtement est en polytétrafluoroéthylène (PTFE) ;
- ledit bouchon comporte, en outre dudit tampon barrière, un composant de scellement perméable aux gaz et étanche aux liquides, avec une première extrémité du tampon barrière, tournée vers la première extrémité du tube, et une seconde extrémité du composant de scellement, tournée vers la seconde extrémité du tube, qui sont disposées l'une contre l'autre ;
- ledit composant de scellement est un tampon gonflant comportant un agent de support fibreux et un agent de gonflement associé à l'agent de support, lequel agent de gonflement gonfle par absorption d'eau au contact de la substance à base liquide ;
- ledit tampon barrière s'étend entre ladite première extrémité et une seconde extrémité formant la seconde extrémité du bouchon ;
- ledit tampon gonflant s'étend entre une première extrémité formant la première extrémité du bouchon et ladite seconde extrémité ;
- le tampon barrière est une tresse formée par l'association de fils et le tampon gonflant est une tresse formée par l'association de fils, avec le tampon barrière qui comporte davantage de fils que le tampon gonflant ;
- l'agent de gonflement est un polymère superabsorbant configuré pour absorber plusieurs centaines de fois son volume en eau ;
- l'agent de gonflement est du polyacrylate de sodium ;
- le composant de scellement a une première couleur prédéterminée en l'absence de contact préalable avec la substance à base liquide et une seconde couleur prédéterminée, ayant une teinte différente de la teinte de la première couleur, lorsqu'il a été en contact avec ladite substance ;
- le composant de scellement comporte un sel non fluorophore à l'état sec et fluorophore quand il est dissout dans l'eau ; et/ou
- le sel fait partie du groupe comportant un sel de fluorescéine, un sel de Rhodamine B, un sel de Rhodamine 6G et un sel d'Eriochrome® Cyanine R.

L'exposé de l'invention sera maintenant poursuivi par la description d'exemples de réalisation, donnée ci-après à titre illustratif et non limitatif, en référence aux dessins annexés, sur lesquels :
- la figure 1 est une vue schématique en coupe longitudinale d'une paillette selon l'invention, à l'état vide ;
- la figure 2 est une vue semblable à la figure 1 mais montrant la paillette à l'état rempli ;
- la figure 3 est une vue semblable à la figure 2, mais montrant la paillette après que la dose de substance qui y était conditionnée a été expulsée ;
- la figure 4 est une vue semblable à la figure 3, mais montrant l'état que prend le bouchon lorsqu'il est partiellement sorti du tube d'une façon prédéterminée ;
- la figure 5 est une vue schématique en coupe du tampon gonflant que comporte le bouchon de la paillette ;
- la figure 6 est une vue schématique en coupe d'un des fils qui forment le tampon gonflant ;
- la figure 7 est une vue schématique en coupe du tampon barrière que comporte le bouchon de la paillette ;
la figure 8 est une vue schématique en coupe d'un des fils qui forment le tampon barrière ;
- les figures 9 à 12 sont des vues semblables aux figures 1, 2, 5 et 7 pour une première variante de la paillette selon l'invention ;
- les figures 13 à 14 sont des vues semblables aux figures 2 et 6 pour une deuxième variante de la paillette selon l'invention ; et
- la figure 15 est une vue semblable à la figure 1 pour une troisième variante de la paillette selon l'invention.

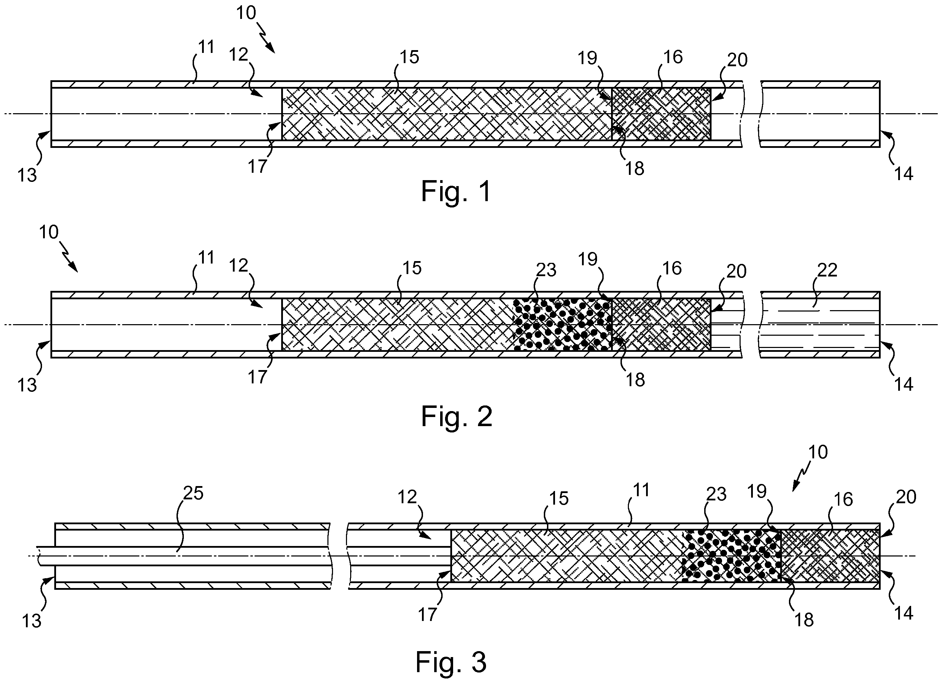

La paillette 10 illustrée sur la figure 1 comporte un tube 11 et un bouchon 12.

Le tube 11 est classiquement en matière plastique extrudée, ici transparente, avec un diamètre interne qui est ici de l'ordre de 1,6 mm et une longueur de l'ordre de 133 mm.

Le diamètre externe du tube 11 est de l'ordre de 2 mm.

Le tube 11 s'étend entre une extrémité 13 et une extrémité 14.

Le bouchon 12 est formé par un tampon gonflant 15 et par un tampon barrière 16.

Le tampon gonflant 15 s'étend entre une extrémité 17 tournée vers l'extrémité 13 du tube 11 et une extrémité 18 tournée vers l'extrémité 14 du tube 11.

Le tampon barrière 16 s'étend entre une extrémité 19 tournée vers l'extrémité 13 du tube 11 et une extrémité 20 tournée vers l'extrémité 14 du tube 11.

L'extrémité 18 du tampon gonflant 15 et l'extrémité 19 du tampon barrière 16 sont disposées l'une contre l'autre.

Le bouchon 12 s'étend entre l'extrémité 17 du tampon gonflant 15 l'extrémité 20 du tampon barrière 16.

Ainsi qu'il sera décrit ultérieurement plus en détails, le tampon gonflant 15 comporte un agent de support fibreux et un agent de gonflement associé à l'agent de support fibreux, lequel agent de gonflement gonfle par absorption d'eau au contact d'un liquide qui en contient, grâce à quoi le tampon gonflant 15 est perméable aux gaz et étanche aux liquides.

On notera que le tampon gonflant 15 est capable de jouer le même rôle que le bouchon tripartite conventionnel, mais que la fabrication de la paillette est plus simple et plus commode puisqu'il suffit d'insérer le tampon gonflant 15 dans le tube 11 (et non un premier tampon fibreux, ensuite la poudre gélifiante et ensuite un deuxième tampon fibreux).

Le tampon barrière 16 est fibreux. Il est perméable aux gaz et aux liquides.

A l'état initial, illustré sur la figure 1, le bouchon 12 est disposé au voisinage de l'extrémité 13 du tube 11 et il est prévu qu'à l'état rempli, la dose de substance 22 (figure 2) qui doit être conservée dans la paillette 10 soit disposée entre le bouchon 12 et l'extrémité 14 du tube 11 la plus éloignée du bouchon 12. La substance 22 est à base liquide contenant de l'eau.

Pour remplir la paillette 10, l'extrémité 13 est mise en communication avec une source de vide tandis que l'extrémité 14 est mise en communication avec un récipient contenant la substance 22 à introduire dans la paillette.

L'air initialement contenu entre le bouchon 12 et l'extrémité 14 est aspiré au travers du bouchon 12 tandis que la substance 22 progresse dans le tube 11 jusqu'à ce qu'elle rencontre le bouchon 12, par l'extrémité 20 du tampon barrière 16 tournée vers l'extrémité 14 du tube 11, c'est-à-dire par l'extrémité du bouchon 12 que l'on voit à droite sur les figures 1 et 2.

La substance 22 traverse le tampon barrière 16 et rencontre le tampon gonflant 15 par son extrémité 18 tournée vers l'extrémité 14 du tube 11, c'est-à-dire par l'extrémité que l'on voit à droite sur les figures 1 et 2.

Au contact de la substance 22, une zone 23 du tampon gonflant 15 située au voisinage de son extrémité 18 prend un état de gonflement contrarié par le tube 11 qui bloque le passage de la substance 22.

La paillette 10 est alors à l'état rempli montré sur la figure 2.

On observera que la zone 23 à gonflement contrarié du tampon 15 est relativement courte à partir de l'extrémité 18, ici de l'ordre de 3 mm.

Il se trouve en effet que la dynamique de gonflement du tampon gonflant 15 au contact de la substance à base liquide 22 est telle qu'un état de gonflement contrarié suffisant pour bloquer le passage du liquide est atteint alors que le gonflement ne s'est produit que sur une distance relativement faible à partir de l'extrémité 18, ici de l'ordre de 3 mm.

Bien que cela soit surprenant, l'utilisation d'un agent de gonflement à dynamique élevée, c'est-à-dire capable d'absorber très rapidement une grande quantité de liquide, n'a pas pour conséquence que le tampon gonflant 15 absorbe une grande quantité de la substance à base liquide 22, mais au contraire, vu la rapidité avec laquelle est atteint l'état de gonflement contrarié permettant de bloquer le passage du liquide, la quantité de liquide absorbé est relativement modérée, par exemple de l'ordre de 3% de la dose de substance 22 introduite dans la paillette 10.

On notera que l'état de gonflement contrarié par le tube 11 que prend le tampon gonflant 15 procure un maintien en position du tampon gonflant 15 par rapport au tube 11 de la paillette 10 qui est relativement élevé.

En particulier, le tampon 15 peut se maintenir lors des manipulations de la paillette 10 à l'état rempli et rester en place dans le tube 11 lors de la congélation de la substance 22.

Le cas échéant, après le remplissage, la paillette est soudée au voisinage de l'une ou de ses deux extrémités 13 et 14 et est stockée au froid.

Pour vider la paillette 10, le cas échéant après découpage des portions d'extrémité soudées et décongélation, on fait pénétrer dans le tube 11 une tige 25 (figure 3) qui vient porter contre l'extrémité 17 du tampon gonflant 15, c'est-à-dire contre l'extrémité du bouchon 12 que l'on voit à gauche sur les figures 1 à 3.

Avec cette tige, on fait coulisser le bouchon 12 à la façon d'un piston vers l'extrémité 14, ce qui provoque l'expulsion de la dose de substance 22 qui avait été introduite dans la paillette.

L'extrémité 14 est à l'emplacement initial ou est en retrait par rapport à l'emplacement initial si le tube 11 avait été soudé et que la portion soudée a été découpée avant l'expulsion de la dose de substance 22.

La figure 3 montre la paillette 10 à la fin de l'expulsion de la dose de substance 22. L'extrémité 20 du tampon barrière 16, qui forme ici l'extrémité du bouchon 12 tournée vers l'extrémité 14 du tube 11, est au niveau de l'extrémité 14.

Si l'on continue à pousser avec la tige 25 sur le bouchon 12, le tampon barrière 16 quitte le tube 11 puis le tampon gonflant 15 sort à son tour du tube 11.

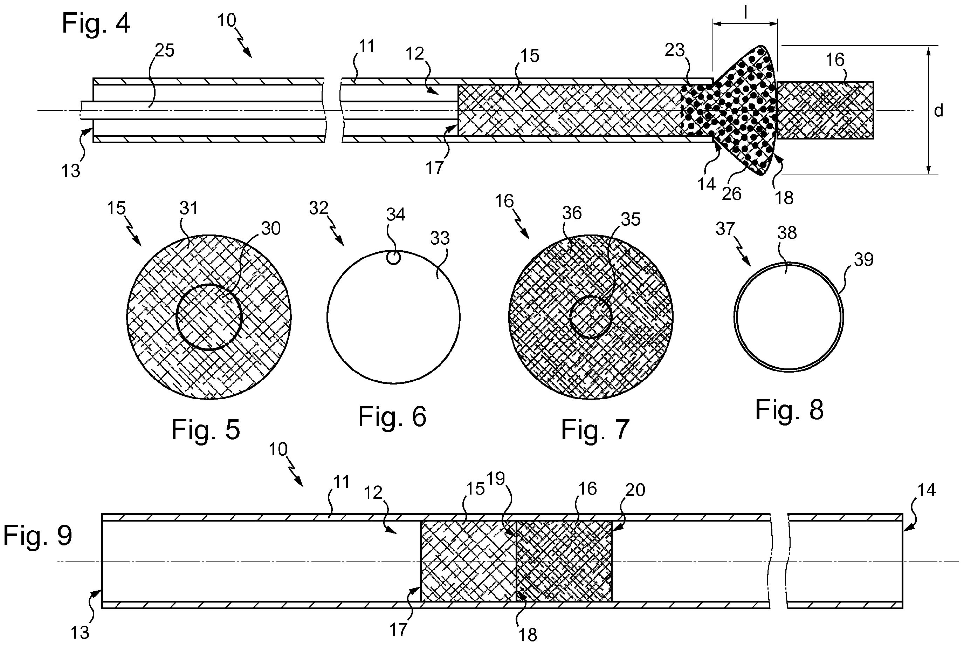

Dans la configuration montrée sur la figure 4, une partie 26 du tampon gonflant 15 a été sortie du tube 11. Ici, la longueur l de la partie 26 est de l'ordre de 2 mm.

En prévoyant que la partie 26 du tampon gonflant 15 sortie du tube 11 ait une longueur l comprise entre 2 et 3 mm, on s'assure que la partie 26 appartenait en totalité à la zone 23 à gonflement contrarié, qui a une longueur de l'ordre de 3 mm.

Dès sa sortie du tube 11, la partie 26 se décompacte. Le décompactage se produit parce que le tube 11 ne reprend plus la tension née du fait que le gonflement a été contrarié. Du fait du décompactage, l'extrémité 18 prend une forme générale convexe et la surface latérale de la partie 26 prend une forme générale tronconique. C'est ainsi que la partie 26 s'épanouit. Une fois l'épanouissement terminé, l'extrémité 18 a un contour qui a ici un diamètre d de l'ordre de 4 mm.

On notera que la partie 26 du tampon gonflant 15 est décrite ci-dessus et est montrée sur la figure 4 de façon très schématique. Du fait que la partie 26 du tampon gonflant 15 est décompactée, son contour réel présente des irrégularités autour du contour général décrit et illustré.

En pratique, la configuration montrée sur la figure 4 peut être obtenue en posant la paillette 10, après que celle-ci a été vidée comme montré sur la figure 3, sur une surface horizontale et en poussant le bouchon 12 jusqu'à ce que le tampon gonflant 15 soit sorti du tube 11 sur la longueur l à partir de l'extrémité 18. Pour faciliter la mesure de la longueur l, la surface horizontale est par exemple formée par une feuille de papier millimétré.

Le placement de la paillette 10 sur la surface horizontale n'influe pas ou a peu d'influence sur la forme prise par la partie 26, puisque c'est après la sortie du tube 11 que la partie 26 se décompacte.

Comme déjà indiqué, à l'état décompacté pris par la partie 26, l'agent de gonflement quitte aisément l'agent de support.

Si, à partir de la configuration montrée sur la figure 4, on fait rouler la paillette 10 sur la surface sur laquelle elle repose, de l'agent de gonflement se dépose sur la surface du fait du roulage sur celle-ci de la partie 26.

Le tampon barrière 16 est utile dans la paillette 10 pour que l'agent de gonflement à l'état humecté reste dans le tampon gonflant 15 : le tampon barrière 16 empêche son passage vers la substance 22.

On notera que lorsque le tampon barrière 16 est dans le tube 11, il est légèrement comprimé et qu'il se relaxe donc légèrement lorsqu'il est hors du tube 11 comme montré sur la figure 4.

Ici, le diamètre du tampon barrière 16 hors du tube 11 est de quelques centièmes de mm en plus du diamètre interne du tube 11.

On va maintenant décrire en détail le tampon gonflant 15 à l'appui des figures 5 et 6.

Le tampon gonflant 15 est une tresse formée par l'association de fils 32 (figure 6). Ici, le tampon gonflant 15 est formé par dix-neuf fils identiques agencés en une âme 30 et en une couverture 31 entourant l'âme 30.

L'âme 30 est formée par trois fils disposés parallèlement les uns contre les autres.

La couverture 31 est à section annulaire. Elle est formée de seize fils tressés répartis en huit fuseaux comportant chacun deux fils.

L'un des fils 32 qui forment le tampon gonflant 15 est montré sur la figure 6, en section, de façon très schématique.

Le fil 32 comporte des fibres support 33 et des fibres gonflantes 34.

L'assemblage des fibres support 33 et des fibres gonflantes 34 pour donner le fil 32 est fait d'une façon bien connue par filage avec une torsion.

Ici, les fibres support 33 sont des filaments discontinus de polyester et/ou de viscose ni craqués ni cardés ; et les fibres gonflantes 34 sont des filaments discontinus de polyacrylate de sodium ni craqués ni cardés.

Le polyacrylate de sodium est un polymère superabsorbant (SAP) capable d'absorber plusieurs centaines de fois son volume d'eau.

On notera que le polyacrylate de sodium n'est pas spermicide et convient donc pour le contact avec de la semence animale.

Les fibres gonflantes 34 ont ici une longueur qui est au plus de 6 mm.

Les fibres support 33 sont relativement aérées. Cela leur permet d'être perméables aux gaz.

En outre, le caractère aéré des fibres support 33 fait que le fil 32 a un contour pelucheux, qui est favorable au maintien du tampon gonflant 15 dans le tube 11 lorsque la paillette est à l'état vide (tampon gonflant 15 à l'état sec).

Les fibres support 33 occupent dans le fil 32 un volume relativement important par rapport au volume occupé par les fibres 34, qui sont relativement compactes.

Cet agencement est favorable à la rapidité d'absorption de liquide par les fils 32 : le caractère aéré des fibres support 33 et l'important volume qu'occupent les fibres support 33 permettent à chaque fil 32 d'être mouillé par une importante quantité de liquide et donc d'alimenter très rapidement en liquide les fibres gonflantes 34.

Dans le tampon gonflant 15 formé par l'association de fils 32 agencés comme déjà indiqués (âme 30 et couverture 31), l'agent de support fibreux est formé par les fibres support 33 des fils 32 et l'agent de gonflement est formé par les fibres gonflantes 34 des fils 32.

Comme déjà indiqué, si, à partir de la configuration montrée sur la figure 4 on fait rouler la paillette 10 sur la surface sur laquelle elle repose, de l'agent de gonflement se dépose sur la surface du fait du roulage sur celle-ci de la partie 26.

On retrouve dans l'agent de gonflement déposé sur la surface des éléments en forme de bâtonnets qui sont des fibres gonflantes 34 ayant absorbées une importante quantité de liquide.

Ici, en poids, le fil 32, à l'état sec, comporte 75 % de fibres support 33 et 25 % de fibres gonflantes 34.

Par conséquent, le tampon gonflant 15, à l'état sec, comporte 75 % d'agent de support fibreux et 25 % d'agent de gonflement.

Il est entendu que pour que le tampon gonflant demeure à l'état sec, l'humidité de l'air ambiant doit rester inférieure à 50 %.

On observera que la proportion de 25% d'agent de gonflement est relativement faible.

Bien que cela soit surprenant, il a été déterminé que la dynamique de gonflement du tampon gonflant 15 est meilleure (gonflement plus rapide) qu'avec une proportion en poids bien plus élevée, telle que 45%. Cela provient sans doute du fait qu'avec une proportion en poids plus élevée il y a une plus petite surface d'échange de sorte que le liquide met davantage de temps à atteindre l'agent de gonflement.

D'une façon générale, il a été déterminé que le tampon gonflant offre une bonne dynamique de gonflement lorsque la proportion d'agent de gonflement est comprise entre 20 % et 30 % en poids.

En pratique, il est possible de connaître la teneur en agent de gonflement dans le tampon gonflant 15 en le pesant à l'état sec (tel qu'il est livré dans une paillette à l'état vide) puis en plaçant le tampon gonflant 15 dans une enveloppe perméable à l'eau pour que les fils restent groupés, puis en lessivant l'ensemble pour éliminer l'agent de gonflement (qui est quasi-liquide à l'état humecté et qui donc s'élimine par lessivage) puis en pesant les fils restant à l'état sec, qui comportent alors le seul agent de support fibreux.

Ici, le tampon gonflant 15 a un poids à sec de l'ordre de 1,07 mg par mm de longueur.

D'une façon générale, il a été déterminé que le tampon gonflant 15 offre de très bonnes performances lorsqu'il a un poids compris entre 0,8 et 1,2 mg par mm de longueur.

On va maintenant décrire en détail le tampon barrière 16 à l'appui des figures 7 et 8.

Le tampon barrière 16 est une tresse qui est ici formée par trente-deux fils identiques agencés en une âme 35 et une couverture 36 entourant l'âme 35.

L'âme 35 est formée de deux fils disposés parallèlement l'un contre l'autre.

La couverture 36 est à section annulaire. Elle est formée de trente fils tressés répartis en six fuseaux comportant chacun deux fils et six fuseaux comportant chacun trois fils.

L'un des fils 37 qui forment le tampon barrière 16 est montré sur la figure 8, en section, de façon très schématique.

Le fil 37 est formé de fibres 38 semblables aux fibres support 33 du fil 32 et par un revêtement 39 rendant le fil 37 hydrophobe.

Ici, le revêtement 39 est en résine fluorée.

Avantageusement, la résine fluorée est une résine fluorocarbonée, par exemple une résine ayant une formule en CF₃(CF₂)ₙ avec n plus grand que 5 et de préférence n = 5 (résine fluorée C6) ou n = 7 (résine fluorée C8).

En variante, le revêtement 39 pour rendre le fil 37 hydrophobe est en polytétrafluoroéthylène (PTFE).

Du fait que les fils 37 sont rendus hydrophobes par le revêtement 39, le tampon barrière 16 a un effet répulsif sur l'eau.

Cet effet répulsif n'empêche pas la substance 22 de traverser le tampon barrière 16 et d'atteindre le tampon gonflant 15, puisqu'en pratique la substance 22 vient à la rencontre du bouchon 12 avec une certaine vitesse.

Au cours du passage de la substance 22 dans le tampon barrière 16, les fils 37 n'absorbent pas de liquide ; et après que la zone 23 à gonflement contrarié du tampon gonflant 15 s'est formée et que le passage de la substance à base liquide est bloqué, le tampon barrière 16 ne garde pas le liquide situé dans ses interstices mais le refoule dans la dose de substance liquide située entre l'extrémité 20 du tampon barrière 16 et l'extrémité 14 du tube 11.

Par conséquent, il n'y a pas de consommation ou alors une consommation très réduite de substance liquide par le tampon barrière 16.

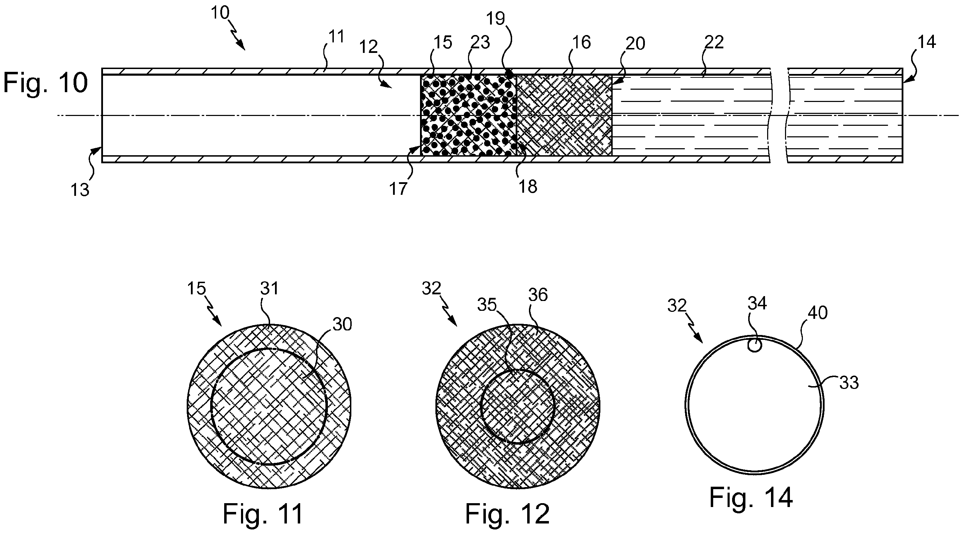

La variante de la paillette 10 montrée sur les figures 9 et 10 est semblable à la paillette 10 qui vient d'être décrite à l'appui des figures 1 à 8, si ce n'est que :
- le tampon gonflant 15 est plus court, avec ici une longueur (distance entre ses extrémités 17 et 18) qui est de l'ordre de 3 mm ;
- le tube 11 a un diamètre interne qui est plus grand, ici de l'ordre de 2,5 mm ; et
- de même, le tampon gonflant 15 et le tampon barrière 16 ont un plus grand diamètre.

Le diamètre externe du tube 11 est de l'ordre de 3 mm.

Ici, le tampon gonflant 15 de la paillette 10 montrée sur les figures 9 et 10 est fait avec les mêmes fils 32, mais en plus grand nombre, que le tampon gonflant 15 de la paillette 10 montrée sur les figures 1 à 4.

Plus précisément, comme montré sur la figure 11, le tampon gonflant 15 de la paillette 10 montrée sur les figures 9 et 10 est ici une tresse formée par quarante-huit fils identiques agencés en une âme 30 formée de seize fils tressés répartis en douze fuseaux comportant chacun deux fils et en une couverture 31, à section annulaire et entourant l'âme 30, formée de vingt-quatre fils tressés répartis en douze fuseaux comportant chacun deux fils.

Ici, le tampon barrière 16 est fait avec des fils 37 semblables mais plus épais que les fils 37 du tampon barrière 16 de la paillette 10 montrée sur les figures 1 à 4.

Plus précisément, comme montré sur la figure 12, le tampon barrière 16 de la paillette 10 montrée sur les figures 9 et 10 est ici une tresse formée par vingt-huit fils identiques agencés en une âme 35 formée de quatre fils disposés parallèlement les uns contre les autres et en une couverture 36, à section annulaire et entourant l'âme 35, formée de vingt-quatre fils répartis en douze fuseaux comportant chacun deux fils.

Du fait que le tampon gonflant 15 a une longueur (distance entre ses extrémités 17 et 18) qui est de l'ordre de 3 mm, la zone 23 à gonflement contrarié, qui est également ici de l'ordre de 3 mm, s'étend, comme on le voit sur la figure 10, sur toute la longueur du tampon gonflant 15.

Une partie du tampon gonflant 15 sortie du tube 11 sur une longueur de l'ordre de 2 mm à partir de l'extrémité 18, s'épanouit comme la partie 26 montrée sur la figure 4.

Une fois l'épanouissement terminé, l'extrémité 18 a un contour qui a ici un diamètre d de l'ordre de 6 mm.

D'une façon générale, en prévoyant que la partie du tampon gonflant 15 sortie du tube 11 ait une longueur l comprise entre 2 et 3 mm, on s'assure que la partie sortie du tube 11 appartenait en totalité à la zone 23 à gonflement contrarié, qui a une longueur de l'ordre de 3 mm.

Pour observer l'épanouissement, il convient de conserver une partie du tampon gonflant 15 dans le tube 11. Par exemple, avec le tampon 15 de la paillette 10 montrée sur les figures 1 à 4, la partie sortie du tube peut avoir une longueur l de 3 mm puisque le tampon gonflant 15 est plus long. Avec le tampon gonflant 15 de la paillette 10 montrée sur les figures 9 et 10, la partie sortie du tube doit avoir une longueur plus petite que 3 mm (c'est la longueur du tampon gonflant 15).

On notera que l'agencement en tresse des fils 32 qui forment le tampon gonflant 15 permet aux fils 32 de se retenir les uns aux autres mais qu'au voisinage des extrémités les fils 32 peuvent assez facilement se détresser et s'écarter les uns des autres.

La partie du tampon gonflant 15 sortie du tube, aussi bien pour la paillette 10 montrée sur les figures 1 à 4 que pour la paillette 10 montrée sur les figures 9 et 10, est proche de l'extrémité 18. Le tressage des fils 32 n'empêche dons pas les fils 32, ou plus précisément ce qu'il en reste après gonflement des fibres gonflantes 34, de s'écarter les uns des autres.

En pratique, d'une façon générale, l'extrémité telle que 18 de la partie telle que 23, de longueur comprise entre 2 mm et 3 mm à partir de l'extrémité telle que 18, s'épanouit avec l'extrémité telle que 18 qui prend un diamètre qui peut aller jusqu'à trois fois le diamètre interne du tube.

D'une façon générale, il a été déterminé que la paillette telle que 10 offre de très bonnes performances lorsque la partie telle que 23 du tampon gonflant tel que 15, de longueur comprise entre 2 mm et 3 mm à partir de l'extrémité telle que 18, s'épanouit avec l'extrémité telle que 18 qui prend un diamètre au moins égal à une fois et demi le diamètre interne du tube.

Par exemple, pour la paillette 10 montrée sur les figures 1 à 4, dont le diamètre interne est de l'ordre de 1,6 mm, le diamètre de l'extrémité 18 est au moins égal à 2,4 mm ; et pour la paillette 10 montrée sur les figures 9 et 10, dont le diamètre interne est de l'ordre de 2,5 mm, le diamètre de l'extrémité 18 est au moins égal à 3,7 mm.

Le gonflement de l'agent de gonflement est alors contrarié de façon adéquate par le tube 11.

En ayant son gonflement ainsi contrarié par le tube 11, l'agent de gonflement du tampon gonflant 15 devient si compact qu'il bloque le passage de la substance à base liquide 22 tandis qu'il confère une tenue mécanique à la zone 23 à gonflement contrarié.

En particulier, le tampon gonflant 15 reste cohérent (l'agent de gonflement et l'agent de support fibreux sont retenus l'un à l'autre) lorsque le tampon gonflant 15 est coulissé dans le tube 11 pour vider la paillette 10.

On notera que le blocage de la substance à base liquide 22 procuré par le tampon gonflant 15, qui se produit particulièrement rapidement ainsi qu'expliqué ci-dessus, convient particulièrement bien pour effectuer le remplissage des paillettes 10 avec une machine automatique, dont la cadence peut être très élevée, jusqu'à plusieurs milliers de paillettes par heure.

Dans la paillette 10 illustrée sur les figures 9 et 10, le fait que le bouchon soit plus court permet de maximiser l'espace disponible pour le stockage de la substance à base liquide.

On observera que dans la paillette 10 illustrée sur les figures 1 à 4, la longueur du bouchon 12, c'est-à-dire la distance entre l'extrémité 17 du tampon gonflant 15 et l'extrémité 20 du tampon barrière 16 est de l'ordre de 10 mm, et que la distance entre l'extrémité 14 du tube 11 et l'extrémité 17 du tampon gonflant 15 est de l'ordre de 7 mm.

La paillette 10 illustrée sur les figures 1 à 4 peut donc s'utiliser exactement comme une paillette conventionnelle. En particulier, pour être vidée, elle peut être disposée dans un pistolet d'insémination conventionnel.

On observera que dans la paillette 10 illustrée sur les figures 1 à 4, dont le diamètre interne du tube est de l'ordre de 1,6 mm, et dont la section interne du tube est donc de l'ordre de 2 mm², le tampon gonflant 15 comporte dix-neuf fils 32 soit 9,5 fils par mm² de section du tube ; et que dans la paillette 10 illustrée sur les figures 9 et 10, dont le diamètre interne du tube est de l'ordre de 2,5 mm, et dont la section interne du tube est donc de l'ordre de 5 mm², le tampon 15 comporte quarante-huit fils soit 9,6 fils par mm² de section du tube.

D'une façon générale, il a été déterminé que le tampon gonflant 15 offre de très bonnes performances lorsqu'il y a entre 8 et 11 fils par mm² de section du tube de la paillette.

D'une façon générale, à l'exception du revêtement 39 des fils 37, le tampon barrière 16 de la paillette 10 montrée sur les figures 1 à 4 et le tampon barrière 16 de la paillette 10 montrée sur les figures 9 et 10 est configuré comme l'un des tampons fibreux d'un bouchon tripartite conventionnel.

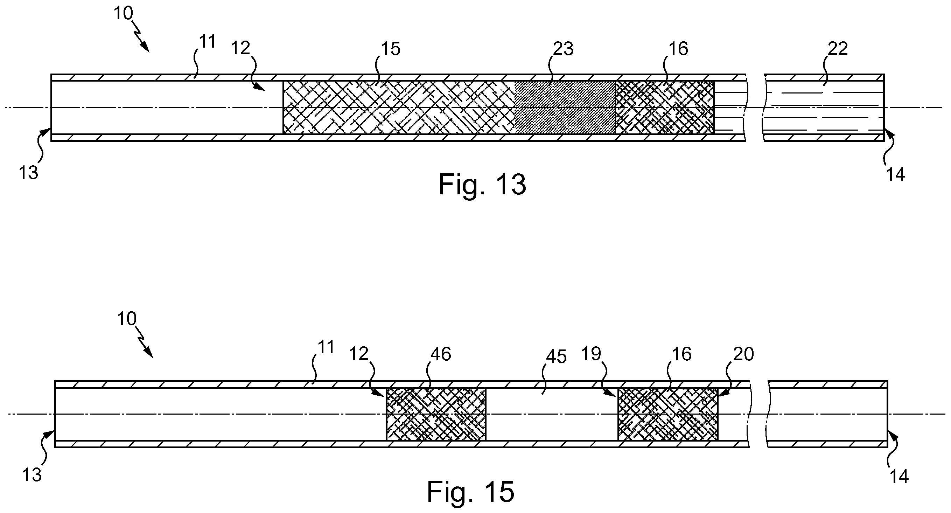

La variante de la paillette 10 montrée sur la figure 13 est semblable à la paillette 10 montrée sur les figures 1 à 4, si ce n'est que les fils 32 qui forment le tampon gonflant 15, montrés sur la figure 14, sont semblables au fil 32 montré sur la figure 6 mais comportent un revêtement 40 à changement de teinte entre l'état sec et l'état humecté.

A l'état vide, le tampon gonflant 15 de la paillette 10 montrée sur la figure 13 a le même aspect que le tampon gonflant 15 de la paillette 10 montrée sur la figure 1.

A l'état rempli, la zone 23 à gonflement contrarié du tampon 15 de la paillette montrée sur la figure 13 a un aspect différent du tampon 15 à l'état sec.

Plus précisément, lorsque la paillette 10 montrée sur les figures 13 est à l'état vide, le tampon gonflant 15 a une première couleur et lorsque cette paillette 10 est à l'état rempli montré sur la figure 13, la partie humectée du tampon gonflant 15 (zone 23 à gonflement contrarié) a une seconde couleur.

Ici, la teinte de la première couleur (état vide) est blanche légèrement marron tandis que la teinte de la seconde couleur (état rempli) est jaune légèrement verte.

Par exemple, le tampon gonflant 15 lorsque la paillette est à l'état vide, tel que vu au travers du tube 11, a une couleur Pantone® 155U et la zone 23 du tampon gonflant 15 lorsque la paillette est à l'état rempli (figure 13), tel que vu au travers du tube 11, a une couleur Pantone® 395C.

On rappelle ici que la teinte d'une couleur correspond aux longueurs d'ondes (ou à la longueur d'onde unique si la couleur fait partie de l'arc-en-ciel) de la lumière émise par l'objet ayant cette couleur. La teinte n'est qu'une des composantes de la couleur, qui dépend d'autres paramètres tels que la luminosité et la saturation.

Le changement de teinte du tampon gonflant 15 entre l'état sec et l'état humecté est dû à la présence du revêtement 40 à changement de teinte.

Ici, le revêtement 40 est en sel sodique de fluorescéine.

On notera que le sel sodique de fluorescéine n'est pas spermicide et convient donc pour le contact avec de la semence animale.

On sait que le sel sodique de fluorescéine a la formule suivante : 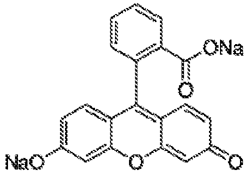 et qu'il est identifié par le numéro CAS 518-47-8.

On sait également que le sel sodique de fluorescéine est un sel fluorofore, c'est-à-dire capable d'émettre de la lumière de fluorescence, lorsqu'il est dissout dans l'eau ; tandis qu'à l'état sec il s'agit d'un sel non fluorofore.

Lorsque le tampon gonflant 15 de la paillette 10 montrée sur la figure 13 est à l'état sec, le sel sodique de fluorescéine n'émet pas de lumière de fluorescence puisqu'il est à l'état sec. Lorsque ce tampon gonflant est à l'état humecté, le sel sodique de fluorescéine est dissout dans l'eau contenue dans la portion 33 et émet alors de la lumière de fluorescence.

Le changement de teinte de la portion 23 du tampon gonflant 15 est dû à l'ajout de la lumière de fluorescence.

Grâce à la présence du sel sodique de fluorescéine, le tampon gonflant 15 forme un composant indicateur de contact entre le bouchon 12 et la substance 22 : le tampon de gonflement 15 a une première couleur prédéterminée en l'absence de contact préalable avec la substance 22 et une seconde couleur prédéterminée, ayant une teinte différente de la teinte de la première couleur, lorsque le tampon gonflant 15 a été en contact avec la substance 22.

Le composant indicateur de contact avec la substance 22 que forme le tampon gonflant 15 est utile pour contrôler le bon remplissage de la paillette 10, et plus précisément la bonne humectation du bouchon 12 par la substance 22.

Le contrôle du bon remplissage de la paillette peut s'opérer visuellement par l'opérateur, par simple vérification que le tampon gonflant 15 du bouchon 12 a bien pris la teinte de la seconde couleur prédéterminée, c'est-à-dire une teinte jaune légèrement verte dans le présent exemple.

Le contrôle du bon remplissage de la paillette 10 peut également s'effectuer de façon automatique.

Dans une variante du tampon gonflant 15, le revêtement 40 en sel sodique de fluorescéine à l'état sec est remplacé par un autre produit non fluorophore à l'état sec et fluorophore quand il est dissout dans l'eau, qui est sous la forme d'un sel à l'état sec.

Il s'agit par exemple d'un autre sel de fluorescéine, d'un sel de Rhodamine B, d'un sel de Rhodamine 6G et/ou d'un sel d'Eriochrome® Cyanine R.

On sait que la Rhodamine B a la formule suivante : 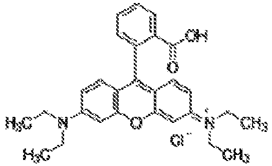 et qu'elle est identifiée par le numéro CAS 81-88-9.

On sait que la Rhodamine 6G a la formule suivante : 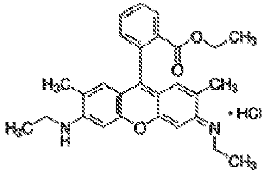 et qu'elle est identifiée par le numéro CAS 989-38-8.

On sait que l' Eriochrome® Cyanine R a la formule suivante : 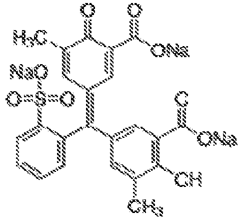 et qu'elle est identifiée par le numéro CAS 64-18-9.

En choisissant un ou plusieurs de ces produits, on peut ajuster la teinte du tampon gonflant 15 à l'état humecté.

Dans d'autres variantes, l'agent tel que le revêtement 40 modifiant la couleur tampon gonflant 15 est colorant, sans être fluorophore.

L'agent modifiant la couleur en étant colorant, sans être fluorophore, est par exemple du bleu de méthylène ou de l'α-zurine.

De tels produits colorants, lorsqu'ils sont à l'état sec, n'influent pas ou n'influent que très peu sur la couleur des autres produits formant le tampon gonflant 15. En revanche, lorsque le tampon gonflant 15 est humecté, le produit colorant communique sa coloration au reste du tampon gonflant 15.

Dans d'autres variantes, le changement de couleur du tampon gonflant 15 s'effectue au contact d'un liquide autre que l'eau, par exemple un produit contenu dans un dilueur ou un conservateur de semence pour semence animale.

Dans d'autres variantes, la matière du tube tel que 11 n'est pas transparente, mais translucide, par exemple légèrement colorée.

Dans des variantes non illustrées, les fils 32 du tampon gonflant 15 sont différents des fils montrés sur les figures 6 et 14, avec par exemple l'intégration de l'agent de gonflement qui s'effectue par revêtement de fibres telles que les fibres support 33, par exemple par trempage de fils faits de tels fibres supports ou par enduction à chaud, ou encore par coextrusion de fibres support multi-filaments et d'une fibre gonflante monofilament, ou encore par mélange intime de fibres support multi-filaments avec une fibre gonflante monofilament.

Dans d'autres variantes non illustrées, le tampon gonflant 15 a des longueurs différentes, par exemple plus longue ou plus courte que le tampon gonflant 15 de la paillette 10 montrée sur les figures 1 à 4.

Dans d'autres variantes non illustrées, le bouchon 12 est formé uniquement par le tampon gonflant 15 (il n'y pas de tampon barrière 16).

Dans d'autres variantes non illustrées, les fils tels que 32 formant le tampon gonflant tel que 15 sont associés autrement que par tressage, par exemple par toronnage ; et/ou les fibres supports 33 sont en matière autre que le polyester et/ou le viscose, par exemple le polyamide ou le polypropylène.

La variante de la paillette 10 montrée sur la figure 15 est semblable à la paillette 10 montrée sur les figures 1 à 4, si ce n'est que le tampon gonflant 15 est remplacé par une poudre 45 capable de se transformer au contact d'un liquide en une pate ou gel imperméable adhérent à la paroi du tube 11 pour que le bouchon 12 soit étanche aux liquides, et par un tampon 46 d'une substance fibreuse.

Ainsi, le bouchon 12 de la paillette 10 illustrée sur la figure 15 est du type tripartite, avec le tampon barrière 16 et le tampon fibreux 46 qui enserrent la poudre 45.

Le bouchon 12 est semblable aux bouchons tripartites conventionnels, si ce n'est que le tampon barrière 16 est formé sur toute la section du tube 11 par des fils 37 comportant chacun des fibres 38 et un revêtement 39 pour que les fils 37 soient hydrophobes.

Dans une variante non illustrée, les fils 37 sont hydrophobes par nature, par exemple parce qu'ils sont en fluor.

Dans une variante non illustrée, le bouchon tel que 12 comporte, en outre du tampon barrière 16, un composant de scellement perméable aux gaz et étanche aux liquides différent du tampon gonflant 15 et de l'ensemble formé par la poudre 45 et par le tampon fibreux 46, par exemple un cylindre monobloc de matière microporeuse hydrophobe tel que décrit dans la demande de brevet européen EP 0 873 726 ou un cylindre monobloc de matière microporeuse auto-scellante frittée tel que décrit dans la demande PCT WO 2010/070533.

Dans les exemples décrits et illustrés, le tampon barrière 16 est le seul composant du bouchon 12 entre le composant de scellement tel que le tampon gonflant 15 ou l'ensemble formé par la poudre 45 et le tampon fibreux 46 et l'emplacement où doit se trouver la substance à base liquide telle que 22. En variante, il y a également un autre composant du bouchon 12, par exemple un composant d'identification tel qu'un fil magnétique.

Dans tous les exemples décrits et illustrés, il n'y a rien d'autre que le composant de scellement (tampon gonflant 15 ou ensemble formé par la poudre 45 et le tampon fibreux 46) entre le tampon barrière 16 et l'extrémité du bouchon 12 la plus proche de l'extrémité voisine du tube 11. En variante, le bouchon 12 comporte d'autres composants, par exemple un composant d'identification tel qu'un fil magnétique.

De nombreuses autres variantes sont possibles en fonction de circonstances, et l'on rappelle à cet égard que l'invention ne se limite pas aux exemples décrits et représentés.

## Revendications

1. Paillette pour la conservation d'une dose prédéterminée de substance (22) à base liquide contenant de l'eau, notamment une substance biologique, comportant un tube (11) s'étendant entre une première extrémité (13) et une seconde extrémité (14) et comportant un bouchon (12) perméable aux gaz et étanche aux liquides, lequel bouchon (12) est disposé dans le tube (11) au voisinage de sa première extrémité (13) et s'étend entre une première extrémité (17) tournée vers la première extrémité (13) du tube (11) et une seconde extrémité (20) tournée vers la seconde extrémité (14) du tube (11), avec ledit bouchon (12) et ledit tube (11) qui sont configurés pour qu'après que la substance (22) à base liquide est venue à la rencontre du bouchon (12) par sa seconde extrémité (20), le bouchon (12) bloque le passage de la substance (22) à base liquide et est, par poussage sur sa première extrémité (17), coulissable dans le tube (11) vers la seconde extrémité (14) du tube (11) ;
**caractérisée en ce que** le bouchon (12) comporte du côté de la seconde extrémité (14) du tube (11) un tampon barrière (16) formé sur toute la section du tube (11) par des fils (37) hydrophobes.

2. Paillette selon la revendication 1, **caractérisée en ce que** chaque fil (37) comporte des fibres (38) et un revêtement (39) pour rendre le fil (37) hydrophobe, lequel revêtement (39) comporte une résine fluorée.

3. Paillette selon la revendication 2, **caractérisée en ce que** ladite résine fluorée est une résine fluorocarbonnée.

4. Paillette selon la revendication 3, **caractérisée en ce que** ladite résine fluorocarbonnée a une formule en CF₃(CF₂)ₙ avec n plus grand que 5 et de préférence n = 5 ou n = 7.

5. Paillette selon l'une quelconque des revendications 2 à 4, **caractérisée en ce que** ledit revêtement (39) est en polytétrafluoroéthylène (PTFE).

6. Paillette selon l'une quelconque des revendications 1 à 5, **caractérisé en ce que** ledit bouchon (12) comporte, en outre dudit tampon barrière (16), un composant de scellement (15 ; 45, 46) perméable aux gaz et étanche aux liquides, avec une première extrémité (19) du tampon barrière (16), tournée vers la première extrémité (13) du tube (11), et une seconde extrémité (18) du composant de scellement (15), tournée vers la seconde extrémité (14) du tube (11), qui sont disposées l'une contre l'autre.

7. Paillette selon la revendication 6, **caractérisé en ce que** ledit composant de scellement est un tampon gonflant (15) comportant un agent de support fibreux et un agent de gonflement associé à l'agent de support, lequel agent de gonflement gonfle par absorption d'eau au contact de la substance (22) à base liquide.

8. Paillette selon la revendication 7, **caractérisé en ce que** ledit tampon barrière (16) s'étend entre ladite première extrémité (19) et une seconde extrémité formant la seconde extrémité (20) du bouchon.

9. Paillette selon l'une quelconque des revendications 7 ou 8, **caractérisé en ce que** ledit tampon gonflant (15) s'étend entre une première extrémité (17) formant la première extrémité du bouchon (12) et ladite seconde extrémité (18).

10. Paillette selon l'une quelconque des revendications 7 à 9, **caractérisée en ce que** le tampon barrière (16) est une tresse formée par l'association de fils (37) et le tampon gonflant (15) est une tresse formée par l'association de fils (32), avec le tampon barrière (16) qui comporte davantage de fils que le tampon gonflant (15).

11. Paillette selon l'une quelconque des revendications 7 à 10, **caractérisée en ce que** l'agent de gonflement est un polymère superabsorbant configuré pour absorber plusieurs centaines de fois son volume en eau.

12. Paillette selon l'une quelconque des revendications 7 à 11, **caractérisée en ce que** l'agent de gonflement est du polyacrylate de sodium.

13. Paillette selon l'une quelconque des revendications 6 à 12, **caractérisée en ce que** le composant de scellement (15) a une première couleur prédéterminée en l'absence de contact préalable avec la substance (22) à base liquide et une seconde couleur prédéterminée, ayant une teinte différente de la teinte de la première couleur, lorsqu'il a été en contact avec ladite substance (22).

14. Paillette selon la revendication 13, **caractérisée en ce que** ledit composant de scellement (15) comporte un sel non fluorophore à l'état sec et fluorophore quand il est dissout dans l'eau.

15. Paillette selon la revendication 14, **caractérisée en ce que** ledit sel fait partie du groupe comportant un sel de fluorescéine, un sel de Rhodamine B, un sel de Rhodamine 6G et un sel d'Eriochrome® Cyanine R.

## Patentansprüche

1. Röhrchen zur Aufbewahrung einer vorbestimmten Dosis einer wasserhaltigen Substanz (22) auf Flüssigkeitsbasis, insbesondere einer biologischen Substanz, der ein Rohrstück (11), das sich zwischen einem ersten Ende (13) und einem zweiten Ende (14) erstreckt und einen Stopfen (12) umfasst, der gasdurchlässigen und flüssigkeitsdicht ist, wobei der Stopfen (12) in dem Rohrstück (11) in der Nähe seines ersten Endes (13) angeordnet ist und sich zwischen einem ersten Ende (17), das dem ersten Ende (13) des Rohrstücks (11) zugewandt ist, und einem zweiten Ende (20), das dem zweiten Ende (14) des Rohrstücks (11) zugewandt ist, erstreckt, wobei der Stopfen (12) und das Rohrstück (11) dazu ausgelegt sind, dass nach Auftreffen der Substanz (22) auf Flüssigkeitsbasis auf den Stopfen (12) an seinem zweiten Ende (20) der Stopfen (12) das Durchströmen der Substanz (22) auf Flüssigkeitsbasis blockiert und durch Drücken auf sein erstes Ende (17) in dem Rohrstück (11) zum zweiten Ende (14) des Rohrstücks (11) hin verschiebbar ist, **dadurch gekennzeichnet, dass** der Stopfen (12) auf der Seite des zweiten Endes (14) des Rohrstücks (11) einen Sperrstopfen (16) aufweist, der über den gesamten Querschnitt des Rohrstücks (11) durch hydrophobe Garne (37) gebildet ist.

2. Röhrchen nach Anspruch 1, **dadurch gekennzeichnet, dass** jedes Garn (37) Fasern (38) und eine Beschichtung (39) aufweist, um das Garn (37) hydrophob zu machen, wobei die Beschichtung (39) ein Fluorharz enthält.

3. Röhrchen nach Anspruch 2, **dadurch gekennzeichnet, dass** das Fluorharz ein Fluorkohlenstoffharz ist.

4. Röhrchen nach Anspruch 3, **dadurch gekennzeichnet, dass** das Fluorkohlenstoffharz eine Formel CF₃(CF₂)ₙ hat, wobei n größer ist als 5 und vorzugsweise n = 5 oder n = 7.

5. Röhrchen nach einem der Ansprüche 2 bis 4, **dadurch gekennzeichnet, dass** die Beschichtung (39) aus Polytetrafluorethylen (PTFE) besteht.

6. Röhrchen nach einem der Ansprüche 1 bis 5, **dadurch gekennzeichnet, dass** der Stopfen (12) zusätzlich zu dem Sperrpfropfen (16) ein gasdurchlässiges und flüssigkeitsdichtes Verschlussteil (15; 45, 46) enthält, wobei ein erstes Ende (19) des Sperrpfropfens (16) dem ersten Ende (13) des Rohrstücks (11) zugewandt ist und ein zweites Ende (18) des Verschlussteils (15) dem zweiten Ende (14) des Rohrstücks (11) zugewandt ist, wobei sie gegeneinander angeordnet sind.

7. Röhrchen nach Anspruch 6, **dadurch gekennzeichnet, dass** das Verschlussteil ein Quellpfropfen (15) ist, der ein faserförmiges Trägermittel und ein mit dem Trägermittel verbundenes Quellmittel umfasst, wobei das Quellmittel bei Kontakt mit der Substanz (22) auf Flüssigkeitsbasis durch Absorption von Wasser aufquillt.

8. Röhrchen nach Anspruch 7, **dadurch gekennzeichnet, dass** der Sperrpfropfen (16) sich zwischen dem ersten Ende (19) und einem zweiten Ende, das das zweite Ende (20) des Stopfens bildet, erstreckt.

9. Röhrchen nach einem der Ansprüche 7 oder 8, **dadurch gekennzeichnet, dass** der Quellpfropfen (15) sich zwischen einem ersten Ende (17), das das erste Ende des Stopfens (12) bildet, und dem zweiten Ende (18) erstreckt.

10. Röhrchen nach einem der Ansprüche 7 bis 9, **dadurch gekennzeichnet, dass** der Sperrpfropfen (16) ein Geflecht ist, das durch die Verbindung von Garnen (37) gebildet ist, und der Quellpfropfen (15) ein Geflecht ist, das durch die Verbindung von Garnen (32) gebildet ist, wobei der Sperrpfropfen (16) mehr Garne aufweist als der Quellpfropfen (15).

11. Röhrchen nach einem der Ansprüche 7 bis 10, **dadurch gekennzeichnet, dass** das Quellmittel ein superabsorbierendes Polymer ist, das dazu ausgelegt ist, das Hundertfache seines Volumens an Wasser zu absorbieren.

12. Röhrchen nach einem der Ansprüche 7 bis 11, **dadurch gekennzeichnet, dass** das Quellmittel Natriumpolyacrylat ist.

13. Röhrchen nach einem der Ansprüche 6 bis 12, **dadurch gekennzeichnet, dass** das Verschlussteil (15) dann, wenn es nicht zuvor mit der Substanz (22) auf Flüssigkeitsbasis in Kontakt gelangt ist, eine erste vorbestimmte Farbe hat und dann, wenn es mit der Substanz (22) in Kontakt gelangt ist, eine zweite vorbestimmte Farbe hat, die einen anderen Farbton als der Farbton der ersten Farbe hat.

14. Röhrchen nach Anspruch 13, **dadurch gekennzeichnet, dass** das Verschlussteil (15) ein Salz enthält, das im trockenen Zustand nicht-fluorophor ist und, wenn es in Wasser gelöst ist, fluorophor ist.

15. Röhrchen nach Anspruch 14, **dadurch gekennzeichnet, dass** das Salz zu der Gruppe gehört, die Fluoresceinsalz, Rhodamin-B-Salz, Rhodamin-6G-Salz und Eriochrom®-Cyanin-R-Salz umfasst.

## Claims

1. A straw for the preservation of a predetermined dose of liquid-based substance (22) containing water, in particular a biological substance, comprising a tube (11) extending between a first end (13) and a second end (14) and comprising a liquid-tight, gas-permeable stopper (12), which stopper (12) being disposed in the tube (11) close to its first end (13) and extending between a first end (17) turned towards the first end (13) of the tube (11) and a second end (20) turned towards the second end (14) of the tube (11), said stopper (12) and said tube (11) being configured so that after the liquid-based substance (22) has come to meet the stopper (12) by its second end (20), the stopper (12) blocks the passage of the liquid-based substance (22) and, by pushing on its first end (17), can be slid in the tube (11) towards the second end (14) of the tube (11);
**characterized in that** the stopper (12) comprises towards the second end (14) of the tube (11) a barrier plug (16) formed over the whole cross-section of the tube (11) by hydrophobic threads (37).

2. A straw according to claim 1, **characterized in that** each thread (37) comprises fibers (38) and a coating (39) to make the thread (37) hydrophobic, which coating (39) comprises a fluorinated resin.

3. A straw according to claim 2, **characterized in that** said fluorinated resin is a fluorocarbon resin.

4. A straw according to claim 3, **characterized in that** said fluorocarbon resin has a formula CF₃(CF₂)ₙ with n greater than 5 and preferably n = 5 or n = 7.

5. A straw according to any one of claims 2 to 4, **characterized in that** said coating (39) is polytetrafluoroethylene (PTFE).

6. A straw according to any one of claims 1 to 5, **characterized in that** said stopper (12) comprises, in addition to said barrier plug (16), a liquid-tight gas-permeable sealing component (15 ; 45, 46), with a first end (19) of the barrier plug (16), turned towards the first end (13) of the tube (11), and a second end (18) of the sealing component (15), turned towards the second end (14) of the tube (11), the first end (19) of the barrier plug (16) and the second end (18) of the sealing component (15) being disposed against each other.

7. A straw according to claim 6, **characterized in that** said sealing component is a swelling plug (15) comprising a fibrous support agent and a swelling agent associated with the support agent, which swelling agent swells by absorption of water in contact with the liquid-based substance (22).

8. A straw according to claim 7, **characterized in that** said barrier plug (16) extends between said first end (19) and a second end forming the second end (20) of the stopper.

9. A straw according to any one of claims 7 or 8, **characterized in that** said swelling plug (15) extends between a first end (17) forming the first end of the stopper (12) and said second end (18).

10. A straw according to any one of claims 7 to 9, **characterized in that** the barrier plug (16) is a braid formed by associating threads (37) and the swelling plug (15) is a braid formed by associating threads (32), the barrier plug (16) comprising more threads than the swelling plug (15).

11. A straw according to any one of claims 7 to 10, **characterized in that** the swelling agent is a superabsorbent polymer configured to absorb several hundred times its volume of water.

12. A straw according to any one of claims 7 to 11, **characterized in that** the swelling agent is sodium polyacrylate.

13. A straw according to any one of claims 6 to 12, **characterized in that** the sealing component (15) has a first predetermined color in the absence of prior contact with the liquid-based substance (22) and a second predetermined color, having a hue different from the hue of the first color, when it has been in contact with said substance (22).

14. A straw according to claim 13, **characterized in that** said sealing component (15) comprises a salt that is non-fluorophore in the dry state and fluorophore when it is dissolved in water.

15. A straw according to claim 14, **characterized in that** said salt forms part of the group comprising a fluorescein salt, a Rhodamine B salt, a Rhodamine 6G salt and a salt of Eriochrome® Cyanine R.
